(19) Europäisches Patentamt / European Patent Office / Office européen des brevets

(11) **EP 3 607 649 B1**

(12) **FASCICULE DE BREVET EUROPÉEN**

(45) Date de publication et mention de la délivrance du brevet:
**02.07.2025 Bulletin 2025/27**

(21) Numéro de dépôt: **18713703.9**

(22) Date de dépôt: **03.04.2018**

(51) Classification Internationale des Brevets (IPC):
**H02P 6/10** *(2006.01)*  **H02K 9/19** *(2006.01)*
**H02K 9/22** *(2006.01)*  **H02K 1/27** *(2022.01)*
**H02K 5/20** *(2006.01)*

(52) Classification Coopérative des Brevets (CPC):
**H02P 6/10; H02K 9/223;** H02K 1/27; H02K 5/203;
H02K 11/33

(86) Numéro de dépôt international:
**PCT/EP2018/058410**

(87) Numéro de publication internationale:
**WO 2018/185061 (11.10.2018 Gazette 2018/41)**

(54) **MACHINE ÉLECTRIQUE HAUTE PUISSANCE THERMOREGULÉE**

TEMPERATURGESTEUERTE ELEKTRISCHE HOCHLEISTUNGSMASCHINE

THERMOCONTROLLED HIGH POWER ELECTRICAL MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.04.2017 FR 1752830**

(43) Date de publication de la demande:
**12.02.2020 Bulletin 2020/07**

(73) Titulaire: **MMT AG**
**6300 Zug (CH)**

(72) Inventeurs:
• **GIRARDIN, David**
**2854 Bassecourt (CH)**
• **CALLERANT, Guillaume**
**68210 Chavan (FR)**
• **DE OLIVEIRA, Dominique**
**90140 Brebotte (FR)**
• **TAVERNIER, Stéphane**
**25000 Besançon (FR)**
• **ANDRIEUX, Gaël**
**2533 Evilard (CH)**

(74) Mandataire: **IP Trust**
**2, rue de Clichy**
**75009 Paris (FR)**

(56) Documents cités:
JP-A- 2008 193 790    JP-A- 2008 196 392
US-A- 5 877 606    US-A- 6 111 333
US-A1- 2013 312 406    US-B1- 7 053 583

• DUCAR IOAN ET AL: "Increasing frequency capability of PMSM vector controlled drive for pumped storage", 2014 INTERNATIONAL CONFERENCE ON APPLIED AND THEORETICAL ELECTRICITY (ICATE), IEEE, 23 October 2014 (2014-10-23), pages 1 - 6, XP032695255, DOI: 10.1109/ICATE.2014.6972643

**Description**

**DOMAINE TECHNIQUE DE L'INVENTION**

La présente invention concerne le domaine des machines électriques de haute puissance (typiquement plusieurs kilowatts) thermorégulées par un circuit de circulation d'un fluide caloporteur intégré dans le corps entourant le stator et le rotor de ces machines. De telles machines thermorégulées à haute performance sont utilisées pour de nombreuses applications, le présent brevet n'étant pas limité, selon son acception la plus générale, à une application spécifique. Toutefois, de telles machines thermorégulées sont particulièrement adaptées pour être associées à une turbine pour former une turbomachine destinée notamment à la suralimentation d'un moteur à explosion et/ou à la génération de puissance électrique, dans un circuit d'air. Ces turbomachines électriques sont notamment utilisées de manière croissante pour optimiser les performances de moteurs à explosion de petite cylindrée, pour réduire le temps de latence, dans le cas des turbomachines. Lorsque le moteur ne nécessite pas de suralimentation, le débit gazeux entraîne la turbine et la turbomachine fonctionne en génératrice électrique.

**ETAT DE LA TECHNIQUE ANTERIEURE**

On connaît dans l'état de la technique le brevet US6111333 décrivant le principe de fonctionnement d'une machine tournante utilisant un moteur sans balai à courant continu sans capteur. Une tension terminale d'un moteur est corrigée dans un correcteur de phase en utilisant un signal de courant de phase du moteur. A ce moment, la tension terminale est traitée dans un intégrateur et un comparateur afin d'être convertie en un signal ON/OFF ayant un rapport de service de 1:1. Ensuite, un signal de rotation est produit sur la base d'une tension induite générée par la rotation d'un rotor à aimant permanent, de sorte qu'un capteur de rotation n'est plus nécessaire. D'autre part, une sortie dérivée du correcteur de phase est introduite en tant que signal de sortie 1 impulsion/1 rotation dans un circuit PLL. Le circuit PLL contient un comparateur de phase, un filtre passe-bas, un oscillateur et un compteur. Le circuit PLL divise en fréquence le signal de sortie 1 impulsion/1 rotation. Les données de l'onde sinusoïdale sont stockées dans une ROM par rapport à chacune des positions du signal divisé en fréquence. Les vibrations de déséquilibre du palier magnétique sont contrôlées à chaque signal divisé en fréquence.

Le brevet US7053583 décrit un procédé pour commander un moteur à courant continu sans balais vers une position, comprenant les opérations consistant à :

- surveiller la position réelle du moteur à courant continu sans balais;
- surveiller l'énergie utilisée par le moteur à courant continu sans balais;
- déterminer une position ordonnée du moteur à courant continu sans balais;
- déterminer une amplitude du changement de la position ordonnée par unité de temps
- employer un procédé de commutation à couple zéro pour commander le moteur à courant continu sans balais à la position ordonnée uniquement quand toutes les conditions suivantes sont satisfaites :

  - l'amplitude du changement de la position ordonnée par unité de temps est inférieure à un premier seuil,

  - une différence entre la position ordonnée et la position réelle est inférieure à un second seuil, et

  - l'énergie utilisée surveillée est inférieure à un troisième seuil; et

- employer un procédé de commutation à couple de pointe (bloc 60) pour commander le moteur à courant continu sans balais (20) pour atteindre la position ordonnée quand l'une quelconque des conditions suivantes sont satisfaites :

  - l'amplitude du changement de la position ordonnée par unité de temps (bloc 94) est supérieure au premier seuil,

- la différence entre la position ordonnée et la position réelle (bloc 96) est supérieure au second seuil,
- l'énergie utilisée surveillée est supérieure au troisième seuil (bloc 98).

**EXPOSE DE L'INVENTION**

L'invention concerne un procédé d'utilisation d'une machine électrique à aimant permanent présentant les caractéristiques énoncées en revendication 1.

Dans un mode de réalisation, ledit circuit électronique comporte un calculateur réglant la valeur moyenne de la tension appliquée par un onduleur à la machine électrique en fonction de la vitesse du rotor de ladite machine, de la fonction de transfert de ladite machine, et du niveau de la tension de la batterie d'alimentation de ladite machine.

Dans un mode de réalisation, ledit calculateur commande un signal à modulation de largeur d'impulsion et commande la période variable dudit signal dudit en fonction :

a) d'une information représentative de la fréquence électrique instantanée de ladite machine d'une part et

b) d'une information représentative du facteur d'ondulation des courants de phase de ladite machine d'autre part.

Dans un mode de réalisation, ledit calculateur commande un signal à modulation de largeur d'impulsion et commande le rapport cyclique variable dudit signal de commande à l'aide d'un asservissement en vitesse proportionnel-intégral à gains fixes, le terme intégral étant activé lorsque l'erreur entre la vitesse souhaitée du rotor de la machine et la vitesse mesurée dudit rotor est inférieure à une valeur prédéterminée.

Dans un mode de réalisation, ledit circuit électronique commande ladite machine thermorégulée en commutation de bloc avec un déphasage de consigne entre le champ statorique et le champ rotorique de ladite machine en fonction de la vitesse de rotation du rotor et des paramètres d'identification de ladite machine thermorégulée, ledit déphasage de consigne augmentant en fonction de ladite vitesse de rotation.

Dans un mode de réalisation, la position du rotor de ladite machine est déterminée à l'aide de sondes magnétosensibles assemblées sur un circuit imprimé dans le module principal et à proximité dudit rotor, lesdites sondes détectant la position dudit rotor, et en ce que ledit calculateur exécute un code corrigeant le décalage entre les commutations fournies par lesdites sondes et la position réelle du rotor en fonction d'une table de correction enregistrée dans une mémoire du calculateur, au moins lors d'une étape d'identification de ladite machine thermorégulée.

**BREVE DESCRIPTION DES FIGURES**

La présente invention sera mieux comprise à la lecture de la description détaillée d'un exemple non limitatif de l'invention qui suit, se référant aux dessins annexés qui représentent :

- la figure 1 le schéma de principe d'un circuit électronique de commande pour une machine thermorégulée suivant l'invention,
- la figure 2 le schéma de principe pour le réglage de la valeur moyenne de la tension appliquée à une machine suivant l'invention,
- la figure 3 un algorithme pour déterminer la période du signal de commande à modulation de largeur d'impulsion appliqué à une machine suivant l'invention,
- la figure 4 un schéma de principe pour l'asservissement de la turbomachine,
- la figure 5 un algorithme de méthode d'indentification pour le réglage du décalage de commutation des sondes de détection d'une machine suivant l'invention.

**DESCRIPTION DU CIRCUIT ELECTRONIQUE**

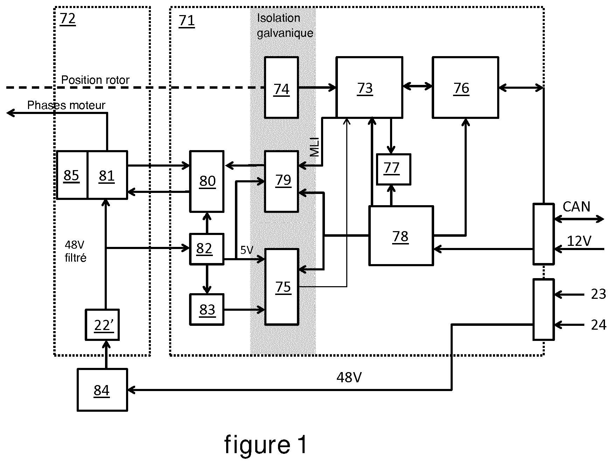

Un exemple non limitatif de réalisation du circuit électronique est représenté en figure 1.

Le circuit électronique se décompose comme décrit précédemment en deux parties complémentaires :

- un étage électronique de commande (71) correspondant aux éléments associés au circuit imprimé (21),
- un étage électronique de puissance (72) correspondant aux éléments associés à la plaque céramique (20), ou plus généralement à un substrat isolé électriquement.

L'étage électronique de commande (71) comprend un calculateur (73), par exemple un calculateur à un cœur 133 Mhz/32 bits, avec 512 Koctets de mémoire permanente flash, une mémoire data flash et 56 Koctets de mémoire volatile, par exemple un calculateur commercialisé par la société Freescale-NXP sous la référence SPC5604P-F0MLL6. La mémoire non volatile est destinée à l'enregistrement des données d'identification de la machine thermorégulée, au moment de l'étape d'identification. Le calculateur (73) reçoit des données numériques provenant :

a) des sondes de Hall (74) montées sur le circuit imprimé (13) précitées,

b) de la tension d'alimentation du moteur par l'intermédiaire d'un isolateur galvanique (75).

Le calculateur (73) transmet des signaux de commande par l'intermédiaire d'un second isolateur galvanique (79). Le calculateur (73) échange également des informations avec l'environnement de la machine thermorégulée selon un protocole multiplexé de type bus CAN par une interface (76). Une mémoire (77) est destinée à l'enregistrement du code informatique commandant le fonctionnement du calculateur (73). De façon connue, le calculateur (73) est alimenté par des moyens de filtrage et de régulation abaisseur de tension (78).

Cet étage (71) comprend également des pilotes (« Gate driver » en anglais) (80) recevant les signaux provenant du second isolateur galvanique (79) et commandant les gâchettes des transistors MOSFET constituant l'onduleur (81) de l'étage de puissance (72).

L'étage électronique de commande (71) comporte également un circuit de régulation abaisseur de tension et de filtrage (82) de la tension de puissance 48 V pour fournir une tension 5 V dans l'exemple décrit. Il comprend encore un convertisseur analogique-digital (83) fournissant au calculateur (73) par l'intermédiaire de l'isolateur galvanique (75) une information numérique qui est l'image de la tension d'alimentation de puissance 48 V appliquée à l'onduleur (81). La tension de puissance est transmise à l'onduleur (81) par l'intermédiaire d'un filtre (22') comprenant les condensateurs (22) précités ainsi que des selfs et des éléments de filtrage usuels destinés à supprimer les tensions transitoires. Un capteur de courant (84) fournit une information correspondant au courant continu de puissance d'alimentation 48 V de l'onduleur (81). La carte céramique (20) supporte l'étage de puissance (72) formé par l'onduleur (81) ainsi que par des composants (85) réalisant un découplage capacitif aux bornes de chaque cellule de l'onduleur (81), par exemple des capacités céramiques. Une cellule d'onduleur (81) est formée de manière connue, selon un exemple de réalisation, par deux transistors MOSFET.

## FONCTIONNALITES DU CALCULATEUR

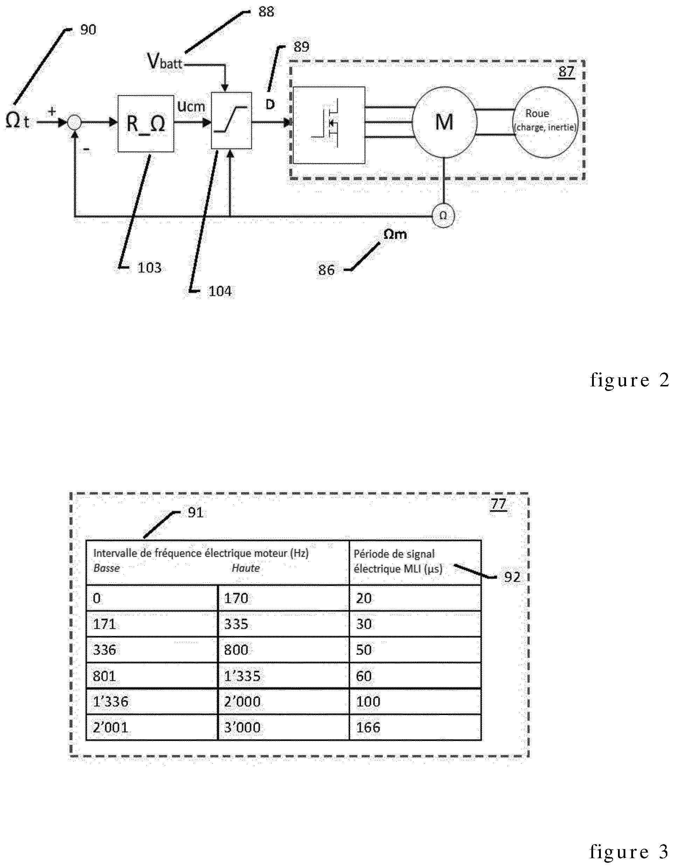

Explicité en figure 2, le calculateur (73) commande un premier traitement pour le réglage de la valeur moyenne de la tension appliquée par l'onduleur (81) à la machine électrique, proportionnelle au rapport cyclique (89), noté D, du signal à modulation de largeur d'impulsions contrôlant les gâchettes des transistors. Le contrôle de la valeur moyenne de la tension appliquée, par une loi de commande (104), aux phases de la machine électrique permet la limitation des courants de phases moteur permettant d'utiliser l'onduleur (81) au maximum de ses capacités en courant tout en garantissant le respect des seuils critiques des MOSFET le composant. Cette loi (104) est déterminée en fonction des caractéristiques du moteur BLDC sur la base des équations de phases en régime stationnaire, ces dernières étant par la suite corrigées en fonction de résultats de mesure ou de simulation. Une identification préalable de l'ensemble onduleur et machine électrique est nécessaire afin de déterminer les caractéristiques de la fonction de transfert de la turbomachine (87). Ces étapes permettent de tenir compte du mode de commande par commutation de bloc afin d'ajuster l'amplitude de la courbe du courant, selon les critères de limitation choisis. Ce traitement permet d'anticiper dans toutes les conditions si une limitation en courant est nécessaire. Il est fonction des données d'entrée constituées par :

- la vitesse de consigne (90),
- la vitesse du rotor (86),
- la fonction de transfert de la turbomachine (87),
- le niveau de la tension d'alimentation de l'onduleur (88).

La différence de la vitesse de consigne (90) et de la vitesse du rotor (86) entre dans le régulateur de vitesse (103).

La loi de limitation (104) peut se traduire sous la forme D=f($\Omega$_m,V_batt ) et ne requière aucune mesure de courant.

Le calculateur (73) commande un deuxième traitement pour déterminer la période du signal de commande à modulation de largeur d'impulsion (92) pilotant l'onduleur (81) afin de réduire efficacement le nombre de commutations des MOSFET composant la cellule active pendant la durée de chaque phaseur statorique, tout en garantissant une ondulation des courants de phases acceptables, un taux de distorsion harmonique faible et un courant de phase crête tolérable pour la turbomachine dans toutes ses conditions d'utilisation. Explicité en figure 3, le mode de réalisation privilégié de ce traitement est un algorithme utilisant un tableau (91) enregistré dans la mémoire (77), permettant de supprimer tout temps de calculs, et d'appliquer la période du signal de commande (92) appropriée lors de chaque changement de phaseur en fonction de la fréquence électrique instantanée proportionnelle à la vitesse du rotor (86). La période du signal de commande identifiée dans le tableau (91) pour chaque plage de fréquence électrique est la résultante d'une phase préalable d'identification réalisée par calculs, simulations et tests permettant de garantir les conditions sur les courants de phases citées précédemment.

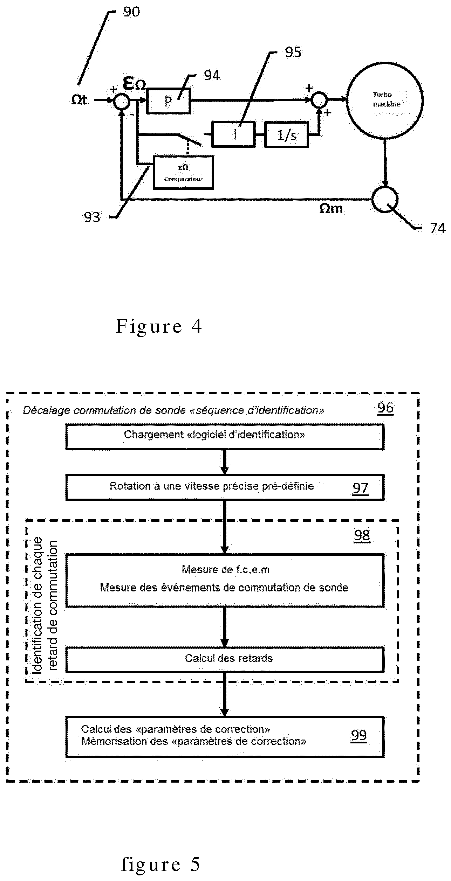

Explicité en figure 4 le calculateur (72) commande un troisième traitement pour asservir la turbomachine et contrôler le rapport cyclique variable du signal de commande à modulation de largeur d'impulsion de l'onduleur (81) afin de garantir une réponse optimale lors de changement de consigne en vitesse, notamment sous la forme d'échelons. Les qualités principales d'une turbomachine asservie en vitesse sont : rapidité, stabilité et précision. En accord avec l'invention, et pour améliorer la rapidité, l'asservissement réduira le temps de monté en utilisant uniquement le terme proportionnel (94) lorsque l'erreur en vitesse (93) est élevée, soit $\Omega t(p) = K_{P}.\varepsilon_{\Omega}(p)$. En accord avec l'invention et pour améliorer la stabilité, l'asservissement se doit donc de diminuer le temps d'établissement en régime stationnaire et d'éviter les dépassements de la consigne de vitesse en utilisant le terme proportionnel (94) et le terme intégral (95) lorsque l'erreur en vitesse (93) est faible, soit $\Omega t(p) =$

$$K_{P.}{}_{\varepsilon_{\Omega}}(p) + \frac{K_i.\frac{\varepsilon_{\Omega}(p)}{p}}{}$$

Le gain du terme proportionnel K_p de $\Omega t(p) = K_{P}.\varepsilon_{\Omega}(p)$ et celui du terme intégral K_i de

$$\Omega t(p) = K_i.\frac{\varepsilon_{\Omega}(p)}{p}$$

sont fixes, déterminés lors de la mise au point du système à la fin du développement pour toute la gamme produite.

Le calculateur (73) commande un quatrième traitement pour commander la machine thermo régulée en commutation de bloc avec un déphasage entre le champ statorique et le champ rotorique en fonction de la vitesse de rotation du rotor et des paramètres d'identification de ladite machine thermo régulée, ledit déphasage augmentant en fonction de ladite vitesse de rotation. Il s'agit en fait de maximiser le couple disponible lors de la première phase d'accélération de la machine, donc lors d'une phase dit à couple constant. L'équation simplifiée du couple instantané dans les machines synchrones auto-commutées triphasées à aimants permanents est de la forme :

$$T_{em}(t) = \frac{\sqrt{3}}{2}.K_E.\hat{I}_s(t).\sin\left(\theta_s(t) - p.\theta(t)\right)$$

Où $K_E$ est une constante moteur, $\hat{I}_s(t)$ est la

valeur crête de courant, p le nombre de paires de pôles de la machine, $\theta_s(t)$ la position du champ magnétique tournant et $\theta(t)$ la position du champ statorique.

Cette équation met en évidence que le couple est maximum dans le premier quadrant (c'est-à-dire en mode moteur), lorsque $\theta_s - p.\theta = \frac{\pi}{2}$, soit quand le champ magnétique $\theta_s$ tournant est en avance de 90° par rapport au champ statorique $\theta$. Il est possible d'exprimer la variation du couple en fonction du déphasage $\psi$ entre le courant statorique et la force électromotrice de la forme

$$\psi = \theta_s(t) - p.\theta(t) - \frac{\pi}{2}$$

, , ayant pour équation résultante $T_{em}(t) = \frac{\sqrt{3}}{2}.K_E.\hat{I}_s(t).\cos(\psi)$. Le couple est donc maximum dans le premier quadrant lorsque les courants statoriques et les forces électromotrices sont en phases. Le quatrième traitement géré par le calculateur a donc pour objectif de commander la machine thermo régulée en commutation de bloc avec un déphasage entre le champ statorique et le champ rotorique constant de valeur $\frac{+\pi}{2}$ s'adaptant en fonction de la vitesse de rotation du rotor et des paramètres d'identification de ladite machine thermo régulée, ledit déphasage augmentant en fonction de ladite vitesse de rotation. Dans le cas d'une machine synchrone à aimants permanents auto-commutée grâce à des éléments magnétosensibles permettant de détecter le champ rotorique, un déphasage est fixé matériellement lors de la construction par le placement mécanique des éléments magnétosensibles par rapport aux placements des bobines du stator de la machine. Ce traitement sera supporté par des fonctions logicielles mémorisées dans (77).

A noter que le principe de ce quatrième traitement logiciel est également applicable dans les phases de fonctionnement à régimes établis et dynamique dans la zone à puissance constante (101).

Le calculateur (73) commande un cinquième traitement pour corriger le décalage temporel existant entre les commutations fournies par lesdites sondes assemblées sur le circuit imprimé (13), et les moments de commutations idéaux, synchrones de la position réelle du rotor. Ce décalage temporel a des conséquences critiques sur la turbomachine au vu des vitesses de rotation très importantes de cette dernière, dégradant fortement sa puissance maximale et son efficacité. Plusieurs causes distinctes conditionnent ce décalage comme les tolérances mécaniques du corps en aluminium (4), du rotor et du stator du moteur et du circuit imprimé (13), les défauts d'alignement des axes du stator et du rotor et la précision de positionnement des sondes sur ledit circuit imprimé (13).

Il est donc nécessaire de corriger individuellement chaque sonde, soit le décalage des commutations hautes (de « 0 » logique à « 1 » logique) dans le cas d'une transition d'aimant au niveau du rotor pôle Nord / pôle Sud et le décalage des commutations basses (de « 1 » logique à « 0 » logique) dans le cas d'une transition d'aimant au niveau du rotor pôle Sud / pôle Nord. La méthode innovante et nouvelle permettant de corriger ce décalage consiste à effectuer en premier lieu une identification (96) de chaque décalage lors du test final de chaque turbomachine sur sa ligne de production, puis d'appliquer avec très peu de ressources logicielles associées les corrections mémorisées à chaque commutation de sondes (100).

Explicité en figure 5, la méthode d'identification des différents décalages consiste à appliquer en premier lieu une vitesse de rotation très précise (97) (entrainement mécanique par un moyen externe ou contrôle de l'onduleur en mode pas à pas), puis de mesurer le décalage entre les passages à zéro des tensions induites, ceux-ci étant l'image des commutations idéales des sondes, et les commutations effectives de ces dernières, pour enfin calculer le décalage -avance ou retard- de chacune de ces commutations (98). La dernière étape (99) consiste à calculer et mémoriser dans la mémoire (77) les corrections à appliquer lors de l'utilisation de la turbomachine avec le logiciel applicatif correspondant. Chacune de ces corrections devra permettre de corriger un décalage pouvant prendre la forme d'une commutation en avance ou en retard.

Corriger une commutation en avance consiste à prendre en compte cette dernière après un temps de latence de la valeur de l'avance mesurée pendant la phase d'identification (96). Corriger une commutation en retard est plus complexe, la méthode consiste à utiliser les deux commutations précédentes et l'erreur calculée par l'asservissement afin de déterminer la vitesse actuelle du rotor et de savoir si la turbomachine est en régime établi ou en phase d'accélération. Dans les cas d'un régime établi, le logiciel émule la commutation « en retard » avant que cette dernière n'existe en calculant une durée connue fondée uniquement sur la durée réelle de la commutation précédente corrigée au préalable. Dans le cas d'une phase d'accélération, le logiciel émule la commutation « en retard » avant que cette dernière n'existe en calculant une durée connue issue de la durée réelle de la commutation précédente corrigée au préalable et de l'incrément de vitesse appliqué par l'asservissement de la turbomachine. Pour un moteur triphasé, l'étape d'identification (98) devra être réalisée six fois, pour les deux commutations de chacune des trois sondes.

## Revendications

1. Procédé d'utilisation d'une machine électrique à aimant permanent comportant plusieurs phases statoriques, la dite machine étant pilotée par un circuit électronique comportant un calculateur (73) alimenté par une batterie fournissant une tension batterie réglant une valeur moyenne d'une tension appliquée par un onduleur (81) aux phases de la machine électrique, le contrôle de la valeur moyenne de la tension appliquée aux phases de la machine électrique permettant la limitation des courants de phase moteur afin d'utiliser l'onduleur au maximum de ses capacités en courant tout en garantissant le respect des seuils critiques des composants, et qui comporte en outre une mesure de la vitesse mesurée du rotor de ladite machine électrique, la valeur moyenne de la tension est déterminée en fonction, de la différence entre la vitesse de consigne et la vitesse mesurée du rotor (101) de ladite machine, ainsi que de la fonction de transfert (87) de ladite machine, et du niveau de la tension de la batterie d'alimentation de ladite machine,
**caractérisée en ce que** ledit calculateur (73) commande un signal à modulation de largeur d'impulsion et commande la période variable dudit signal en fonction :

    a) d'une information représentative de la fréquence électrique instantanée de ladite machine d'une part et
    b) d'une information représentative du facteur d'ondulation des courants de phase de ladite machine d'autre part.

2. Procédé d'utilisation d'une machine électrique selon la revendication 1 **caractérisée en ce que** ledit calculateur (73) commande un signal à modulation de largeur d'impulsion et commande le rapport cyclique variable dudit signal de commande à l'aide d'un asservissement en vitesse proportionnel-intégral à gains fixes, le terme intégral étant activé lorsque l'erreur entre la vitesse souhaitée du rotor de la machine et la vitesse mesurée dudit rotor est inférieure à une valeur prédéterminée.

3. Procédé d'utilisation d'une machine électrique selon la revendication 1 **caractérisée en ce que** ledit circuit électronique commande ladite machine thermorégulée en commutation de bloc avec un déphasage de consigne entre le champ statorique et le champ rotorique de ladite machine en fonction de la vitesse de rotation du rotor et des paramètres d'identification de ladite machine thermorégulée, ledit déphasage de consigne augmentant en fonction de ladite vitesse de rotation.

4. Procédé d'utilisation d'une machine électrique selon la revendication 1 **caractérisée en ce que** la position du rotor de ladite machine est déterminée à l'aide de sondes magnétosensibles assemblées sur un circuit imprimé (13) dans le module principal (1) et à proximité dudit rotor, lesdites sondes détectant la position dudit rotor, et **en ce que** ledit calculateur (73) exécute un code corrigeant le décalage entre les commutations fournies par lesdites sondes et la position réelle du rotor en fonction d'une table de correction enregistrée dans une mémoire du calculateur, au moins lors d'une étape d'identification de ladite machine électrique e.

5. Procédé d'utilisation d'une machine électrique selon l'une des revendications précédentes **caractérisée en ce que** ladite machine est une turbomachine.

**Patentansprüche**

1. Verfahren für die Verwendung einer elektrischen Maschine mit Permanentmagnet, umfassend mehrere Statorphasen, wobei die Maschine durch eine elektronische Schaltung gelenkt wird, umfassend einen Rechner (73), der durch eine Batterie versorgt wird, die eine Batteriespannung liefert, die einen Durchschnittswert einer Spannung regelt, die durch einen Wechselrichter (81) an die Phasen der elektrischen Maschine angelegt wird, wobei die Überwachung des Durchschnittswerts der an die Phasen der elektrischen Maschine angelegten Spannung die Begrenzung der Motorphasenströme ermöglicht, um den Wechselrichter bis zu dem Maximum seiner Stromkapazitäten zu nutzen und gleichzeitig die Einhaltung von kritischen Schwellenwerten von Komponenten zu gewährleisten, und die ferner eine Messung der gemessenen Drehzahl des Rotors der elektrischen Maschine umfasst, wobei der Durchschnittswert der Spannung in Abhängigkeit von der Differenz zwischen der Solldrehzahl und der gemessenen Drehzahl des Rotors (101) der Maschine sowie von der Übertragungsfunktion (87) der Maschine und des Spannungspegels der Stromversorgungsbatterie der Maschine bestimmt wird,
**dadurch gekennzeichnet, dass** der Rechner (73) ein impulsbreitenmoduliertes Signal steuert und die variable Periode des Signals in Abhängigkeit steuert von:

    a) einerseits von Informationen, die die momentane elektrische Frequenz der Maschine darstellen, und
    b) andererseits von Informationen, die den Welligkeitsfaktor der Phasenströme der Maschine darstellen.

2. Verfahren für die Verwendung einer elektrischen Maschine nach Anspruch 1, **dadurch gekennzeichnet, dass** der Rechner (73) ein impulsbreitenmoduliertes Signal steuert und das variable Tastverhältnis des Steuersignals mittels einer proportional-integralen Drehzahlsteuerung mit festen Verstärkungen steuert, wobei der Integralterm aktiviert wird, wenn der Fehler zwischen der gewünschten Drehzahl des Rotors der Maschine und der gemessenen Drehzahl des Rotors kleiner als ein vorbestimmter Wert ist.

3. Verfahren für die Verwendung einer elektrischen Maschine nach Anspruch 1, **dadurch gekennzeichnet, dass** die elektronische Schaltung die wärmegeregelte Maschine in Blockschaltung mit einer Sollphasenverschiebung zwischen dem Statorfeld und dem Rotorfeld der Maschine in Abhängigkeit von der Drehzahl des Rotors und den Identifikationsparametern der wärmegeregelten Maschine steuert, wobei die Sollphasenverschiebung in Abhängigkeit von der Drehzahl zunimmt.

4. Verfahren für die Verwendung einer elektrischen Maschine nach Anspruch 1, **dadurch gekennzeichnet, dass** die Position des Rotors der Maschine mittels magnetosensitiver Sonden bestimmt wird, die auf einer gedruckten Schaltung (13) in dem Hauptmodul (1) und in der Nähe des Rotors montiert sind, wobei die Sonden die Position des Rotors erfassen, und **dass** der Rechner (73) einen Code ausführt, der den Versatz zwischen den durch die Sonden bereitgestellten Kommutierungen und der tatsächlichen Position des Rotors in Abhängigkeit einer in einem Speicher des Rechners aufgezeich-neten Korrekturtabelle korrigiert, mindestens wäh-rend eines Schritts zum Identifizieren der elektrischen Maschine e.

5. Verfahren für die Verwendung einer elektrischen Maschine nach einem der vorstehenden Ansprüche, **dadurch gekennzeichnet, dass** die Maschine eine Turbomaschine ist.

**Claims**

1. Method for operating a permanent-magnet electric machine comprising a plurality of stator phases, said machine being controlled by an electronic circuit comprising a computer (73) powered by a battery supplying a battery voltage which regulates an average value of a voltage applied by an inverter (81) to the phases of the electric machine, the control of the average value of the voltage applied to the phases of the electric machine enabling the motor phase currents to be limited in order to operate the inverter at its maximum current capacity while ensuring compliance with critical thresholds of the components, and which further comprises a measurement of the measured speed of the rotor of said electric machine, the average value of the voltage is determined on the basis of the difference between the setpoint speed and the measured speed of the rotor (101) of said machine, as well as the transfer function (87) of said machine, and the voltage level of the supply battery of said machine,

**characterized in that** said computer (73) controls a pulse-width modulation signal and controls the variable period of said signal on the basis of:

a) information representing the instantaneous electrical frequency of said machine on the one hand, and
b) information representing the ripple factor of the phase currents of said machine on the other hand.

2. Method for operating an electric machine according to claim 1,
**characterized in that** said computer (73) controls a pulse-width modulation signal and controls the variable duty cycle of said control signal using a fixed-gain proportional-integral speed control, the integral term being activated when the error between the desired speed of the rotor of the machine and the measured speed of said rotor is less than a predetermined value.

3. Method for operating an electric machine according to claim 1,
**characterized in that** said electronic circuit controls said temperature-controlled machine in block commutation with a setpoint phase shift between the stator field and the rotor field of said machine as a function of the rotor rotation speed and the identification parameters of said temperature-controlled machine, said setpoint phase shift increasing as a function of said rotation speed.

4. Method for operating an electric machine according to claim 1, **characterized in that** the position of the rotor of said machine is determined using magneto-sensitive probes assembled on a printed circuit (13) in the main module (1) and in the vicinity of said rotor, said probes detecting the position of said rotor, **and in that** said computer (73) executes a code correcting the offset between the commutations supplied by said probes and the actual position of the rotor on the basis of a correction table stored in a memory of the computer, at least during an identification step of said electric machine e.

5. Method for operating an electric machine according to any of the preceding claims, **characterized in that** said machine is a turbomachine.

figure 1

figure 2

| Intervalle de fréquence électrique moteur (Hz) | | Période de signal électrique MLI (µs) |
|---|---|---|
| Basse | Haute | |
| 0 | 170 | 20 |
| 171 | 335 | 30 |
| 336 | 800 | 50 |
| 801 | 1'335 | 60 |
| 1'336 | 2'000 | 100 |
| 2'001 | 3'000 | 166 |

figure 3

90

Ωt → + εΩ → 94 [ P ] → 95 → + → Turbo machine

[ I ] → [ 1/s ]

εΩ Comparateur

93

Ωm → + → 74

Figure 4

Décalage commutation de sonde «séquence d'identification» 96

Chargement «logiciel d'identification»

Rotation à une vitesse précise pré-définie 97

Identification de chaque retard de commutation 98

Mesure de f.c.e.m

Mesure des événements de commutation de sonde

Calcul des retards

Calcul des «paramètres de correction»
Mémorisation des «paramètres de correction» 99

figure 5

**EP 3 607 649 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6111333 A
- US 7053583 B